# EUROPÄISCHE PATENTSCHRIFT

(11) **EP 2 055 966 B1**
(45) Veröffentlichungstag und Bekanntmachung des Hinweises auf die Patenterteilung: **10.04.2013**
(21) Anmeldenummer: 08017076.4
(22) Anmeldetag: 27.09.2008
(51) Int. Cl.: F16B 5/00

(54) **Profilsprosse**
Profile frame
Presse de profil

(30) Priorität: 05.11.2007 DE 102007053014
(43) Veröffentlichungstag der Anmeldung: 06.05.2009
(73) Patentinhaber: Friedrich von Lien AG, 27404 Zeven (DE)
(72) Erfinder: Klez, Hans-Peter, 56743 Mendig (DE)
(74) Vertreter: Kötter, Ulrich

(56) Entgegenhaltungen:
- EP-A2- 0 381 339
- DE-A1- 2 347 520
- US-A1- 2005 241 253
- US-B1- 6 324 796

## Beschreibung

Die Erfindung betrifft eine Profilsprosse zur Befestigung nebeneinander angeordneter Plattenelemente nach dem Oberbegriff des Patentanspruchs 1.

Zur Überdachung beispielsweise von Terrassen ist es bekannt, Profilsprossenkonstruktionen einzusetzen, welche Plattenelemente aufnehmen. Derartige Profilsprossen sind beispielsweise aus der DE 7628171 bekannt. Sie weisen seitliche U-förmige Aufnahmen auf, in welchen die Plattenelemente gehalten sind. Eine gattungsgemäße, dem Oberbegriff des unabhängigen Vorrichtungsanspruchs 1 entsprechende Profilsprosse ist weiterhin in der DE 23 47 520 A1 offenbart.

Nachteilig an den vorbekannten Profilsprossen ist, dass diese nur bedingt eine Vormontage ermöglichen. Weiterhin werden die vorbekannten Profilsprossen auf einer Unterkonstruktion verschraubt, wobei die Schrauben sichtbar sind, wodurch der optische Eindruck der Konstruktion, insbesondere bei Rostansatz der Schrauben, negativ beeinträchtigt wird.

Nachteilig an den vorbekannten Profilsprossen ist, dass diese nur bedingt eine Vormontage ermöglichen. Weiterhin werden die vorbekannten Profilsprossen auf einer Unterkonstruktion verschraubt, wobei die Schrauben sichtbar sind, wodurch der optische Eindruck der Konstruktion, insbesondere bei Rostansatz der Schrauben, negativ beeinträchtigt wird.

Hier will die Erfindung Abhilfe schaffen. Der Erfindung liegt die Aufgabe zu Grunde, eine Profilsprosse der vorgenannten Art zu schaffen, welche eine einfache Vormontage mit den zu befestigenden Plattenelementen und gleichzeitig eine verdeckte Verschraubung der Profilsprosse mit einer Unterkonstruktion ermöglicht. Gemäß der Erfindung wird diese Aufgabe dadurch gelöst, dass zwischen den Rippen eine Bohrung zur Befestigung der Teilprofile an einer Unterkonstruktion vorgesehen ist. Hierdurch ist die Fixierung der "eingerahmten" Plattenelemente im Zuge der Montage der Dachkonstruktion ermöglicht.

Mit der Erfindung ist eine Profilsprosse geschaffen, welche eine einfache Vormontage mit den zu befestigenden Plattenelementen und gleichzeitig eine verdeckte Verschraubung der Profilsprosse mit einer Unterkonstruktion ermöglicht. Durch die Verrastbarkeit der Teilprofile ist eine Vormontage einzelner mit Teilprofilen "eingerahmter" Plattenelemente ermöglicht, welche im Zuge der Montage miteinender verrastet werden können.

Vorteilhaft ist die Bohrung über eine durchstechbare Materialschicht verschlossen. Hierdurch ist eine verdeckte Verschraubung der Profile ermöglicht. Die durchstechbare Materialschicht der Bohrung des der Unterkonstruktion zugewandten Teilprofils kann zur Verschraubung mit der Unterkonstruktion leicht durchdrungen werden. Nach Verrastung mit dem zugeordneten Teilprofil wird die Schraube von der gegenüberliegenden, nicht durchstochenen Materialschicht verdeckt.

In Weiterbildung der Erfindung weist jeweils die äußere Rippe eines Teilprofils einen Versatz auf, an dessen Ende ein pilzartiges Kopfstück angeordnet ist, das die Rastnase bildet. Durch den Versatz ist ein federndes Rippenteilstück gebildet, welches im Zuge der Verrastung das pilzartige Kopfstück gegen den U-förmigen Abschnitt des zugeordneten Teilprofils drückt. Bedingt durch die geringe Kontaktfläche des Kopfstücks wird ein hoher Anpressdruck erzielt, durch den die Verbindung zwischen den Teilprofilen verstärkt wird. Bevorzugt entspricht der Überstand des Kopfstücks im Wesentlichen dem Versatz der äußeren Rippe.

Vorteilhaft ist unterhalb der U-förmigen Aufnahme der Teilprofile eine Nut zur Aufnahme eines Federstahls angeordnet. Hierdurch wird die Montage eines Federelementes, beispielsweise eines Federstahls ermöglicht, der in zwei gegenüberliegend eines aufgenommenen Plattenelements angeordnete Nuten eingebracht und gegen das Plattenelement vorgespannt wird. Dadurch wird das Plattenelement zusätzlich mittig abgestützt, wodurch Verformungen, beispielsweise verursacht durch Schneelasten, entgegengewirkt werden kann.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:
- Figur 1:: die schematische Darstellung eines aus zwei Teilprofilen ausgebildeten Randsprossenprofils und
- Figur 2:: die Darstellung des Profils aus Figur 1 mit Rastsicherung.

Die als Ausführungsbeispiel gewählte Profilsprosse ist als Randsprosse ausgebildet und besteht aus zwei identischen Teilprofilen 1, 2. Die Teilprofile 1, 2 weisen jeweils eine U-förmige Aufnahme 11, 21 für - nicht dargestellte -Plattenelemente auf, welche mit nach innen ragenden flexiblen Lippen 12, 22 versehen sind. Die flexible Lippen 12, 22 sind derart ausgerichtet, dass sie dem Einschub eines Plattenelementes einen geringen und dem Entfernen eines Plattenelementes einen großen Widerstand entgegensetzen. An die U-förmige Aufnahme 11, 21 ist ein Steg 13, 23 angeformt, an den orthogonal zu diesem beabstandet zur Aufnahme 11, 21 eine Rippe 14, 24 und wiederum beabstandet zu der Rippe 14, 24 parallel zu dieser am Ende des Steges 13, 23 eine weitere, kürzer ausgeführte Rippe 15, 25 angeformt sind.

An dem freien Ende der längeren Rippe 14, 24 ist der kürzeren Rippe 15, 25 entgegengerichtet eine Rastnase 141, 241 angeformt. Die kürzeren Rippen 15, 25 weisen etwa mittig einen Versatz 151, 251 auf. An ihren freien Enden ist an die kürzeren Rippen 15, 25 ein pilzartiges Kopfstück 152, 252 angeformt, dessen Überstand etwa dem Versatz 151, 251 entspricht. Mittig ist das Kopfstück 152, 252 mit einer Einkerbung 153, 253 versehen, welche die Federwirkung der mit dem Versatz 151, 251 versehenen Rippe 15, 25 verstärkt.

Zwischen den längeren Rippen 14, 24 und den kürzeren Rippe 15, 25 ist in den Steg 13, 23 eine Bohrung 131, 231 eingebracht, die mit einer dünnen, leicht durchdringbaren Materialschicht verschlossen ist. Zur Befestigung eines Teilprofils 1, 2 an einer Unterkonstruktion kann diese dünne Materialschicht mittels einer Schraube 4 leicht durchstochen werden.

Die Rippen 14, 25 bzw. 15, 24 sind derart ausgebildet, dass die Rastnasen 141, 241 der längeren Rippen 14, 24 mit den Kopfstücken 152, 252 der kürzeren Rippen beim Zusammenfüge der Teilprofile 1, 2 verrasten. Die der - nicht dargestellten - Unterkonstruktion zugewandte Bohrung 231 dient der Befestigung des Teilprofils 2 mittels einer Schraube 4 an der Unterkonstruktion.

Die Bohrung 131 bleibt entweder durch die dünne Materialschicht verschlossen, so dass eine verdeckte Verschraubung erzielt ist.

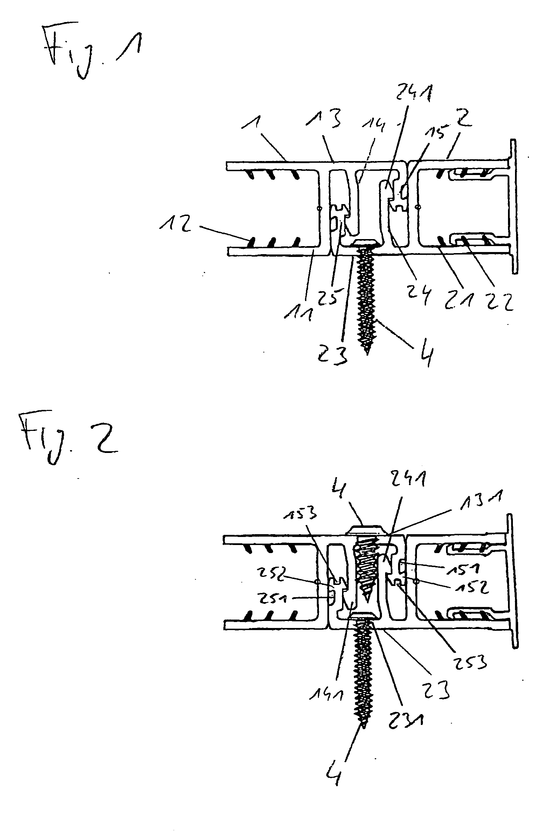

Im Ausführungsbeispiel gemäß Figur 2 ist durch die Bohrung 131 eine Schraube 4 als Rastsicherung eingebracht. Durch die Schraube 4 werden die längeren Rippen 14, 24 gegen die kürzeren Rippen 15, 25 gepresst, wodurch eine Verstärkung der Rastverbindung erzielt ist. Alternativ kann auch ein Stift als Rastsicherung in die Bohrung 131 eingebracht sein, der vorzugsweise konisch ausgebildet ist und eine Hinterscheidung aufweist, mittels der er in der Bohrung 131 rastbar ist.

## Patentansprüche

1. Profilsprosse zur Befestigung nebeneinander angeordneter Plattenelemente, umfassend zwei miteinander verbindbare, identisch ausgebildete Teilprofile, die jeweils eine U-förmige Aufnahme für wenigstens ein Plattenelement sowie wenigstens zwei sich quer zur Längsachse des wenigstens einen Plattenelements erstreckende zueinander beabstandete Rippen unterschiedlicher Länge aufweisen, wobei an den Enden der Rippen (14, 15, 24, 25) Rastnasen (141, 152 bzw. 241, 252) abgeformt sind, welche mit den Rastnasen (241, 252 bzw. 141, 152) des jeweils zu verbindenden Teilprofils (1, 2) verrastbar sind, **dadurch gekennzeichnet, dass** zwischen den Rippen (14, 15, 24, 25) eine Bohrung (131, 231) zur Befestigung der Teilprofile (1, 2) an einer Unterkonstruktion vorgesehen ist.

2. Profilsprosse nach Anspruch 1, **dadurch gekennzeichnet, dass** die Bohrung (131, 231) über eine durchstechbare Materialschicht verschlossen ist.

3. Profilsprosse nach einem der vorgenannten Ansprüche, **dadurch gekennzeichnet, dass** jeweils die äußere Rippe (15, 25) eines Teilprofils (1, 2) einen Versatz (151, 251) aufweist, an dessen Ende ein pilzartiges Kopfstück (152, 252) angeordnet ist, das die Rastnase bildet.

4. Profilsprosse nach Anspruch 3, **dadurch gekennzeichnet, dass** der Überstand des Kopfstücks (152, 252) im Wesentlichem dem Versatz (151, 251) der äußeren Rippe (15, 25) entspricht.

## Claims

1. Profile frame for fixing plate elements arranged adjacent to one another, comprising two identically formed part profiles which can be connected with one another, each of which has a U-shaped retaining seat for at least one plate element and at least two ribs of different lengths at a distance from one another extending at right angles to the lengthwise axis of at least one plate element, where engaging tappets (141, 152 and 241, 252) are moulded at the ends of the ribs (14, 15, 24, 25) which engage with the engaging tappets 10 (241, 252 and 141, 152) of the part profile (1, 2) being connected, **characterised in that** a bore (131, 231) is provided between the ribs (14, 15, 24, 25) for attaching the part profiles (1, 2) to a substructure.

2. Profile frame according to claim 1, **characterised in that** the bore (131, 231) is sealed by a layer of material which capably of being pierced through.

3. Profile frame according to either of the above claims **characterised in that** in each case, the outer rib (15, 25) of a part profile (1, 2) has an offset (151, 251), at the end of which a mushroom-shaped top part (152, 252) is arranged which forms the engaging tappet.

4. Profile frame according to claim 3, **characterised in that** the projection of the top part (152, 252) corresponds substantially to the offset (151, 251) of the outer rib (15, 25).

## Revendications

1. Presse de profil servant à fixer des éléments plaques juxtaposés, comprenant deux profilés partiels de configuration identique reliables entre eux qui présentent chacun un réceptacle en U recevant au moins un élément plaque ainsi qu'au moins deux nervures de longueurs différentes espacées les unes des autres s'étendant transversalement à l'axe longitudinal d'au moins un élément plaque, sachant qu'aux extrémités des nervures (14, 15, 24, 25) ont été modelées des saillies de crantage (141, 152 et 241, 252) prouvant encranter dans les saillies de chantage (241, 252 et 141, 152) du profilé partiel (1, 2) à relier respectivement, **caractérisée en ce qu'**entre les nervures (14, 15, 24, 25) a été prévu un alésage (131, 231) servant à fixer les profilés partiels (1, 2) contre une substructure.

2. Presse de profil selon la revendication 1, **caractérisée en ce que** l'alésage (131, 231) est obturé par une couche de matière perforable.

3. Presse de profil selon l'une des revendications précédentes, caractérisée ce que la nervure extérieure (15, 25) d'un profilé partiel (1, 2) présent un décalage (151, 251) à l'extrémité duquel est agencée une pièce têtière fongiforme (152, 252) formant la saillie de crantage.

4. Presse de profil selon la revendication 3, **caractérisée en ce que** la partie dépassante de la pièce têtière (152, 252) correspond essentiellement au décalage (151, 251) de la nervure extérieure (15, 25).
